# EUROPÄISCHE PATENTSCHRIFT

(11) **EP 1 287 947 B1**
(45) Veröffentlichungstag und Bekanntmachung des Hinweises auf die Patenterteilung: **30.03.2005**
(21) Anmeldenummer: 02018436.2
(22) Anmeldetag: 16.08.2002
(51) Int. Cl.: B23Q 7/00, B23P 19/00, B65G 61/00, B23Q 37/00

(54) **Handhabungsvorrichtung**
Handling device
Dispositif de manutention

(30) Priorität: 31.08.2001 DE 10144248
(43) Veröffentlichungstag der Anmeldung: 05.03.2003
(73) Patentinhaber: FELSOMAT GmbH & Co. KG, D-75203 Königsbach-Stein (DE)
(72) Erfinder: Jäger, Helmut F., 75203 Königsbach-Stein (DE)
(74) Vertreter: Gahlert, Stefan, Dr.-Ing.

(56) Entgegenhaltungen:
- EP-A- 0 071 884
- EP-A- 0 865 869
- EP-A- 1 125 678
- DE-A- 3 508 282
- DE-A- 19 805 206
- GB-A- 2 124 941

## Beschreibung

Die Erfindung betrifft eine Handhabungsvorrichtung zur Handhabung und Bereitstellung von auf Paletten aufgenommenen Teilen, die mit einer anderen Station eines Fertigungssystems koppelbar ist, beispielsweise um eine Werkzeugmaschine mit Rohteilen zu versorgen und um Fertigteile daraus abzuführen, gemäß dem Oberbegriff des Anspruchs 1, wie z.B. aus der GB-A- 21 24 941 bekannt.

Derartige Handhabungsvorrichtungen sind seit langem bekannt und werden in Fertigungssystemen eingesetzt, um den Teilefluß für die zugeordneten Bearbeitungsstationen zu unterstützen. Insbesondere dienen die Handhabungsvorrichtungen in Fertigungssystemen auch der Pufferung von Teilen, um die verschiedenen Stationen eines Systems zu entkoppeln. Bei einer aus der EP-A-0 865 869 bekannten Handhabungsvorrichtung werden einzelne Paletten über einen Stapelaustauschmodul mit einem Drehteller in einen nach außen abgeschlossenen Handhabungsraum eingeschleust, innerhalb dessen die Paletten mittels eines weiteren Funktionsmoduls aufgenommen, umgestapelt und zur Übergabe an ein zugeordnetes Portal bereitgestellt werden können.

Bei einer weiteren Handhabungsvorrichtung, die aus der DE-A-198 05 206 bekannt ist, werden übereinander gestapelte Paletten, die auf Rollwagen aufgenommen sind, mittels einer Stapeltransporteinheit zwischen einer Zuführposition, einer Entnahmeposition und einer Bereitstellungsposition transportiert, wobei ein zugeordnetes Portal vorgesehen ist, um mittels eines Portalgreifers Teile von einer Palette aufzunehmen oder auf dieser abzulegen.

Beide vorbekannten Handhabungsvorrichtungen weisen zwar gewisse Vorteile zur Handhabung von auf Paletten aufgenommenen Teilen auf, besitzen jedoch gewisse Nachteile, die damit zusammen-hängen, daß die Paletten, auf denen die Teile aufgenommen sind, zu Palettenstapeln zusammengefaßt sind, wodurch zusätzliche Transportvorgänge, Umstapelvorgänge und ähnliches erforderlich werden können. Bei der Handhabung von Volumenteilen, d.h. von Teilen, die eine erhebliche Baugröße aufweisen, ergeben sich weitere Probleme infolge des großen Platzbedarfs. Da die Hubhöhe einer jeweiligen Handhabungsvorrichtung begrenzt ist, können mit derartigen Handhabungsvorrichtungen nur sehr begrenzte Stückzahlen von Teilen aufgenommen werden, wodurch die Pufferkapazität der betreffenden Handhabungsvorrichtung sehr begrenzt ist. Soll die Pufferkapazität vergrößert werden, so führt dies zu einer entsprechenden Vergrößerung des Flächenbedarfs der jeweiligen Handhabungsvorrichtung.

Auch Bänder, die vielfach in Fertigungssystemen eingesetzt werden, um Teile zu transportieren und zwischenzuspeichern, besitzen erhebliche Nachteile, da auch Bänder nur eine begrenzte Speicherkapazität aufweisen und für einen schnellen Teilefluß und für eine Verfolgung einzelner Teile durch das Fertigungssystem ungeeignet sind.

Der Erfindung liegt somit die Aufgabe zugrunde, eine Handhabungsvorrichtung zu schaffen, die die Nachteile des Standes der Technik vermeidet und insbesondere auch bei begrenztem Flächenbedarf eine verbesserte Pufferkapazität zur Pufferung von Teilen bereitstellt. Ferner soll ein möglichst schneller und flexibler Zugriff auf einzelne Teile oder Paletten ermöglicht werden.

Ferner soll ein verbessertes Fertigungssystem angegeben werden, das eine derartige Handhabungsvorrichtung verwendet.

Diese Aufgabe wird durch eine Handhabungsvorrichtung zur Handhabung und Bereitstellung von Teilen gemäß dem Anspruch 1 gelöst.

Die Aufgabe der Erfindung wird auf diese Weise vollkommen gelöst.

Erfindungsgemäß wird nämlich nunmehr eine Lagerstation in der Art eines Vertikalspeichers verwendet, in die mittels einer Hubstation Paletten gezielt an bestimmte Aufnahmeplätze eingesetzt werden können oder aus bestimmten Aufnahmeplätzen entnommen werden können und zu einer Bereitstellungsstation übergeben werden können.

Auf diese Weise kann die Pufferkapazität bei gleichbleibendem Flächenbedarf deutlich erhöht werden, indem einfach die Bauhöhe der Lagerstation entsprechend vergrößert wird. Da in der Regel in Fertigungsanlagen lediglich der Flächenbedarf so gering wie möglich gehalten werden soll, jedoch die zur Verfügung stehende Höhe bislang meist nicht ausgenutzt wurde, ergibt sich mit einem derartigen Handhabungssystem eine deutlich vergrößerte Aufnahmekapazität für Teile, was insbesondere bei Volumenteilen von Bedeutung ist.

Bei einem erfindungsgemäßen Fertigungssystem ist eine erfindungsgemäße Handhabungsvorrichtung mit mindestens einer Station zur Durchführung von Bearbeitungs-, Transport- und/oder Handhabungsoperationen an Teilen gekoppelt.

Es sind zwar grundsätzlich mechanisierte Lagervorrichtungen mit einer Hebestation, einer Lagerstation zur Aufnahme von Paletten und mit einer Ausgabestation bekannt, vergl. zum Beispiel WO 97/37564, jedoch ist die Erfindung hierdurch nicht nahegelegt, da derartige Lagersysteme lediglich zur manuellen Ein- bzw. Ausgabe ausgebildet sind und nicht als Handhabungsvorrichtungen ausgebildet sind, die in Fertigungssysteme eingebunden werden können.

Die erfindungsgemäße Handhabungsvorrichtung ermöglicht eine gezielte Ansteuerung einzelner Paletten, ohne daß hierzu zunächst Umstapelvorgänge notwendig sind. Somit ergibt sich der Vorteil, daß verschiedenartige Fertigungsstrategien in einem verketteten Fertigungssystem ohne weiteres programmgesteuert durchgeführt werden können. So kann ein Fertigungssystem, das mittels der erfindungsgemäßen Handhabungsvorrichtungen und mittels zugeordneter Portale verkoppelt ist, einen flexiblen Teilefluß gewährleisten, wobei eine hohe Ausfallsicherheit des Gesamtsystems erreicht wird. Dabei ist problemlos eine Umstellung der jeweiligen Strategie möglich, z.B. von "First in/first out" auf "one-piece-flow", auf die Einhaltung einer gewissen Mindestzahl der in einer Handhabungsvorrichtung gespeicherten Teile, auf die "Auffrischung" eines Puffers, d.h. Lehrfahren sämtlicher in einer Handhabungsvorrichtung gespeicherten Teile, bevor neue Teile eingelagert werden und dergleichen mehr.

Ferner ist es möglich, ohne Zeitverzögerung gezielt auf einzelne Teile oder Paletten zuzugreifen. So können beispielsweise gezielt einzelne Teile geprüft, eingeschleust oder ausgeschleust werden.

Ein weiterer Vorteil der erfindungsgemäßen Handhabungsvorrichtung besteht darin, daß verschiedene Typen gespeichert werden können, wodurch während des laufenden Fertigungsbetriebes ohne weiteres verschiedene Typen bearbeitet und gespeichert bzw. zwischengespeichert werden können.

Zur Verwaltung kann auf leistungsfähige Logistiksoftware zurückgegriffen werden. Insgesamt läßt sich ein einheitliches, modulares Steuerungskozept für das gesamte Fertigungssystem verwirklichen.

Es ist denkbar, zusätzlich weitere Teile in der Handhabungsvorrichtung zu speichern, die normalerweise extern gespeichert und zu- bzw. abgeführt werden müssen. So können beispielsweise Umrüstteile für Maschinen gespeichert werden, Adapter, Spannadapter, Werkzeuge und dergleichen mehr, die zur manuellen, automatischen oder halbautomatischen Zuführung an Bearbeitungseinrichtungen oder andere Stationen vorgesehen sind.

Je nach den jeweiligen Anforderungen kann die erfindungsgemäße Handhabungsvorrichtung modular aufgebaut und um einzelne Stationen erweitert werden.

So kann eine erfindungsgemäße Handhabungsvorrichtung beispielsweise in ihrer einfachsten Ausführung lediglich mit zwei Lagerstationen, einer Hebestation und einer Bereitstellungsstation ausgestattet sein, um etwa eine oder mehrere Bearbeitungsstationen, z.B. Werkzeugmaschinen, mit Rohteilen zu versorgen und Fertigteile daraus zu entnehmen. Jedoch kann eine derartige Handhabungsvorrichtung auch Teil eines verketteten Fertigungssystems sein und nicht nur Speicher- und Handhabungsoperationen, sondern auch zusätzliche Funktionen ausführen, wozu beispielsweise die Bereitstellungsstation mit einer Einrichtung zur Durchführung von Zusatzoperationen, wie etwa eine Reinigungseinrichtung, eine Positioniereinrichtung, eine Schwenkeinrichtung zum Verschwenken von Teilen um eine oder mehrere Achsen, eine Abblaseinrichtung, eine Wascheinrichtung, ein Signiereinrichtung oder eine Prüfeinrichtung zum Prüfen von Teilen aufweisen kann.

Ein weiterer Vorteil der Erfindung besteht darin, daß die Teile in der Lagerstation gegen Umwelteinflüsse und gegen Fremdzugriff geschützt aufgenommen sind.

Gemäß der Erfindung ist die Hebestation mit mindestens zwei Lagerstationen gekoppelt.

Hierdurch wird auf relativ kostengünstige Weise die Pufferkapazität der Handhabungsvorrichtung vergrößert.

Gemäß einer weiteren Ausführung der Erfindung weist die Handhabungsvorrichtung eine Ladestation zum Be- und Entladen von Teilen oder Paletten auf.

Auf diese Weise kann ein Benutzer Teile oder Paletten in die Handhabungsvorrichtung einführen oder aus dieser entnehmen. Hierbei können auch bestimmte Teile, die z.B. geprüft werden sollen, zunächst auf einer Palette gespeichert und dann ausgegeben werden. Gleichermaßen können beispielsweise als fehlerhaft erkannte Teile ("NIO-Teile") gesondert ausgegeben werden. Die Ladestation kann auf einer Höhe angeordnet werden, die unter ergonomischen Gesichtspunkten optimal ist, z.B. in einer Höhe von 900 mm, während die Bereitstellungsstation auf einer anderen Höhe von z.B. 1400 mm angeordnet werden kann, die für eine zugeordnete Station, wie z.B. eine Werkzeugmaschine optimal ist.

Es ist zweckmäßig, die Ladestation zum Be- und Entladen mit einem Berührungsschutz gegenüber dem übrigen Teil der Handhabungsvorrichtung zu versehen, damit die notwendige Unfallsicherheit gewährleistet ist. Hierzu kann beispielsweise zwischen der Ladestation und einer benachbarten Lagerstation eine Schleuse vorgesehen sein.

Gemäß einer weiteren vorteilhaften Ausgestaltung der Erfindung weist die Bereitstellungsstation ein Portal auf, an dem mindestens ein Greifer zur Handhabung von Teilen verfahrbar aufgenommen ist.

Je nach den jeweiligen Anforderungen kann der Greifer lediglich ein Verfahren entlang des Portals und ein Aufnehmen oder Ablegen von Teilen ermöglichen, oder eine Verschwenkung von Teilen um eine oder mehrere Achsen und gegebenenfalls zusätzlich eine Linearbewegung oder eine Verschwenkbewegung mittels einer Schwinge erlauben.

Wie bereits erwähnt, können an der Bereitstellungsstation zusätzliche Einrichtungen zur Durchführung von Zusatzoperationen vorgesehen sein.

Des weiteren kann die Bereitstellungsstation mit einer Auffangwanne zum Auffangen von Flüssigkeiten versehen sein, um beispielsweise eine Waschoperation in Verbindung mit einer Kübelachse durchführen zu können.

Gemäß einer weiteren Ausgestaltung der Erfindung ist die mindestens eine zugeordnete Station, mit der die Handhabungsvorrichtung gekoppelt ist, als Portal ausgebildet.

Dies ermöglicht eine vorteilhafte Anbindung einer erfindungsgemäßen Handhabungsvorrichtung an weitere Komponenten eines Fertigungssystems.

Gemäß einer weiteren Ausgestaltung der Erfindung weisen die Transportmittel zum Bewegen von Paletten zwischen der Hebestation, der Lagerstation und der Bereitstellungsstation einen Schleppantrieb auf, an dem mindestens ein Mitnehmer vorgesehen ist, dem Mitnehmeraufnahmen an den Paletten zugeordnet sind.

Auf diese Weise wird ein besonders einfacher, zuverlässiger und kostengünstiger Transport von Paletten zwischen den benachbarten Stationen der Handhabungsvorrichtung ermöglicht.

Die Hebestation kann eine in Vertikalrichtung geführte und verfahrbare Palettenaufnahme aufweisen, an der an zumindest einer Stirnfläche ein Endlosförderglied des Schleppantriebes derart angeordnet ist, daß eine Palette mittels des mindestens einen Mitnehmers zwischen der Hebestation und mindestens einer benachbarten Station in Horizontalrichtung bewegbar ist.

Gemäß einer weiteren Ausführung der Erfindung weist die Hebestation eine in Vertikalrichtung geführte und verfahrbare Palettenaufnahme auf, die mit einem Linearantrieb zum Verfahren der Palettenaufnahme in Vertikalrichtung gekoppelt ist.

Auf diese Weise wird eine schnelle und exakte Positionierung von Paletten zwischen den einzelnen Speicherpositionen in Vertikalrichtung und mittels des Schleppantriebes eine gezielte Bewegung in Horizontalrichtung ermöglicht.

Sofern weitere benachbarte Stationen vorgesehen sind, die nicht mittels des Schleppantriebes an der Palettenaufnahme der Hebestation erreichbar sind, so können diesen zusätzlichen Stationen weiteren Fördereinrichtungen in Form von Linearantrieben, Schleppantrieben oder anderen Antrieben zugeordnet sein, um die Bewegung von Paletten zwischen den zusätzlichen Stationen zu gewährleisten.

Gemäß einer vorteilhaften Weiterbildung der Erfindung weist die Handhabungsvorrichtung mindestens einen NC-gesteuerten Antrieb auf. Hierbei kann es sich um den Antrieb für die Hebestation zum Heben und Senken und/oder den Antrieb zur horizontalen Bewegung von Paletten zwischen der Hebestation, der Lagerstation, der Bereitstellungsstation oder weiteren Stationen handeln. Die NC-Antriebe können frei programmierbar sein.

Auf diese Weise können eine schneller Transport und eine präzise Positionierung von Paletten bzw. Teilen erreicht werden.

Gemäß einer weiteren Ausführung der Erfindung sind zumindest im Bereich der Bereitstellungsstation Anschlagelemente vorgesehen, die mit den Transportmitteln zur Positionierung von Paletten zusammenwirken.

Auf diese Weise wird mit einfachen Mitteln eine exakte Positionierung jeweils einer Palette in dem Bereich ermöglicht, in dem Handhabungsvorgänge stattfinden.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine perspektivische Ansicht einer ersten Ausführung einer erfindungsgemäßen Handhabungsvorrichtung in stark vereinfachter Ausführung und
- Fig. 2: eine Aufsicht einer weiteren Ausführung einer erfindungsgemäßen Handhabungsvorrichtung mit einer zugeordneten Bearbeitungsstation in schematischer Darstellung.

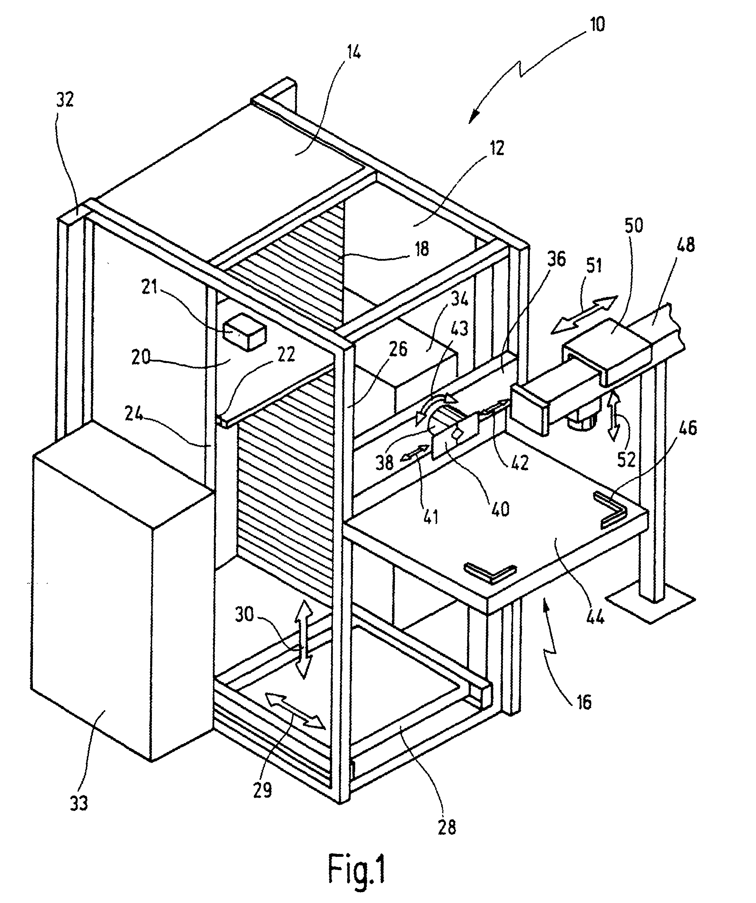

In Fig. 1 ist eine erfindungsgemäße Handhabungsvorrichtung insgesamt mit der Ziffer 10 bezeichnet.

Die Handhabungsvorrichtung 10 weist mehrere Stationen auf, die sämtlich in einem stabilen Gestell 32 aufgenommen sind, so daß die Handhabungsstation 10 als Ganzes transportiert und an der gewünschten Position in einem Fertigungssystem aufgestellt werden kann. Die Handhabungsstation 10 weist drei Stationen auf, nämlich eine Lagerstation 14, in der vertikal übereinander eine Vielzahl von Aufnahmeplätzen 18 zur Aufnahme von Paletten 20 vorgesehen ist, eine Hebestation 12 mit einer Palettenaufnahme 28, sowie eine Bereitstellungsstation 16, die der Hebestation 12 benachbart ist.

In der Hebestation 12 ist die Palettenaufnahme 28 in Vertikalrichtung entlang von Vertikalführungen 24 geführt und in nicht näher dargestellter Weise in Vertikalrichtung antreibbar, so daß gewünschte Positionen, die bestimmten Aufnahmeplätzen 18 der Lagerstation 14 benachbart sind, gezielt angefahren werden können, wie durch den Pfeil 30 verdeutlicht ist. Des weiteren ist an der Palettenaufnahme 28 noch eine Verfahrmöglichkeit zum Verfahren von Paletten 20 in Horizontalrichtung zwischen der Lagerstation 14 auf der einen Seite, der Hebestation 12 und der Bereitstellungsstation 16 auf der anderen Seite vorgesehen, wie durch den Doppelpfeil 29 angedeutet ist.

Die Bereitstellungsstation 16 weist einen festen Tisch 44 auf, der an einer bestimmten vertikalen Position fest montiert ist und zur Aufnahme einer Palette 20 ausgebildet ist. Auf dem Tisch 44 können Anschlagelemente 46 vorgesehen sein, um eine Palette 20, die von der Transporteinrichtung der Palettenaufnahme 28 beispielsweise mittels Mitnehmern, die in Mitnehmeraufnahmen 22 der Palette 20 eingreifen, auf den Tisch 44 verschoben werden, exakt zu positionieren.

Beidseits der Lagerstation 14 können ferner, wie in Fig. 1 beispielhaft dargestellt ist, Schaltschränke 33, 34 vorgesehen sein, die der notwendigen elektrischen Versorgung und Steuerung dienen.

Der Bereitstellungsstation 16 ist eine externe Station zugeordnet, die eine Anbindung der Handhabungsvorrichtung 10 an weitere Stationen eines Fertigungssystems ermöglicht. Hierbei kann es sich beispielsweise um ein Portal 48 handeln, auf dem ein Portalschlitten 50 mit einem daran angeordneten Greifer verfahrbar ist, um so ein Verfahren von Teilen entlang des Portals in Richtung des Doppelpfeils 51 und gegebenenfalls zusätzlich in einer dazu senkrechten Richtung zu ermöglichen, wie durch den Doppelpfeil 52 schematisch angedeutet ist.

Im einfachsten Fall weist die Bereitstellungsstation 16 lediglich eine Ablagemöglichkeit zur Aufnahme und Übergabe von Teilen 21 zwischen der externen Station, beispielsweise dem Portal 48, und der Handhabungsvorrichtung 10 auf.

Jedoch sind vorzugsweise weitere Funktionsmodule an der Handhabungsvorrichtung insbesondere im Bereich der Bereitstellungsstation 16 vorgesehen, um weitere Funktionen an Teilen 21 durchführen zu können. Hierzu kann die Bereitstellungsstation 16 beispielsweise mit einem Querportal 36 versehen sein, an dem eine "Kübelachse 38" vorgesehen ist, die ein Verschwenken von Teilen um eine Achse ermöglicht, wie durch den Doppelpfeil 43 angedeutet ist. Eine solche "Kübelachse" dient in Verbindung mit einer Wascheinrichtung zum Waschen ("Kübeln") von Teilen in mindestens zwei Schwenklagen. An der Kübelachse 43 kann ein Greifer 40 aufgenommen sein, der, wie durch die Pfeile 41, 42 angedeutet, gegeneinander verfahrbare Greiferelemente zum Ergreifen von Teilen aufweist.

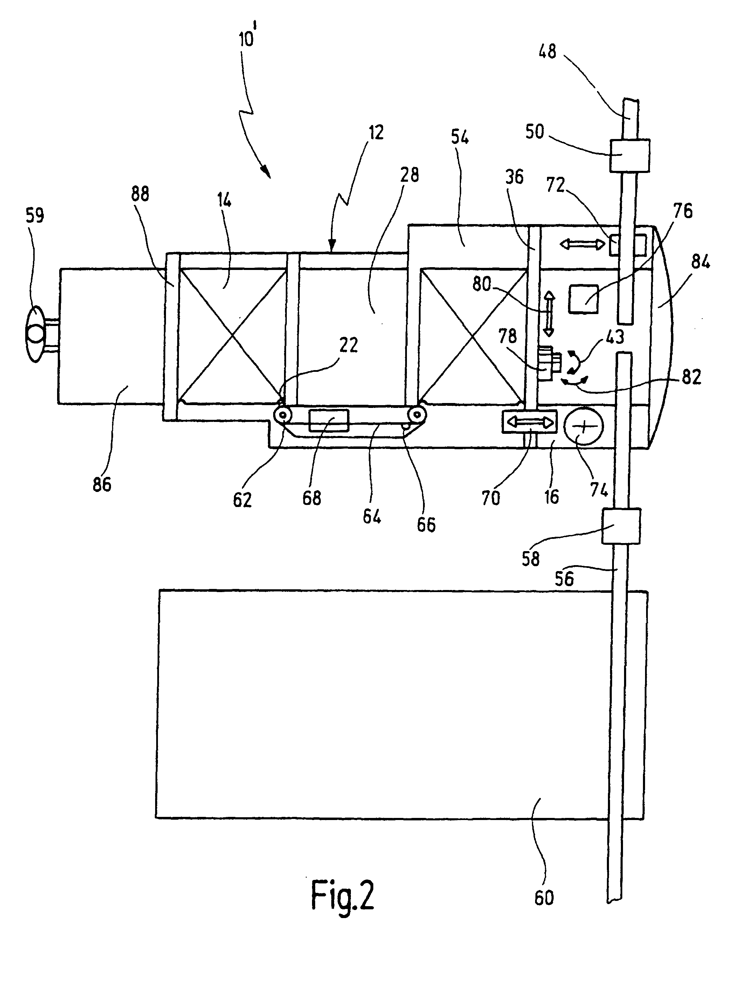

Darüber hinaus können im Bereich der Bereitstellungsstation 16 jedoch auch andere oder weitere Module aufgenommen sein, um andere Funktionen an den Teilen durchführen zu können, wie nachfolgend noch anhand von Fig. 2 erläutert wird.

Eine abgewandelte Ausführung einer erfindungsgemäßen Handhabungsvorrichtung ist in Fig. 2 dargestellt und insgesamt mit der Ziffer 10' bezeichnet.

Hierbei werden für entsprechende Teile entsprechende Bezugsziffern verwendet.

Die Handhabungsvorrichtung 10' ist Teil eines Fertigungssystems, an das sie beispielsweise über ein erstes Portal 48 und ein zweites Portal 56 angekoppelt ist. Beide Portale münden im Bereich der Bereitstellungsstation 16 und weisen Schlitten 50, 58 auf, mittels derer Teile entlang der Portale 48, 56 verfahren werden können und senkrecht dazu bewegt und abgelegt werden können, um Teile 21 auf einer darunter befindlichen Palette ablegen zu können oder von dieser aufzunehmen.

Die Handhabungsvorrichtung 10' weist insgesamt fünf hintereinander angeordnete Stationen auf. Entsprechend der Ausführung gemäß Fig. 1 ist unmittelbar angrenzend an die Hebestation 12 eine Lagerstation 14 angeordnet. Auf der anderen Seite der Hebestation 12 befindet sich im Unterschied zu Fig. 1 jedoch eine weitere Lagerstation 54, an die sich die Bereitstellungsstation 16 anschließt.

An die Lagerstation 14 ist schließlich noch eine Ladestation 86 über eine Schleuse berührungssicher angekoppelt, so daß eine Bedienungsperson 59 gefahrlos Teile aus einer auf der Ladestation 86 befindlichen Palette entnehmen kann oder in diese einlegen kann, oder auch ganze Paletten wechseln kann. Der Transport einer Palette 22 zwischen der Lagerstation 14 und der Ladestation 86 kann bei geöffneter Schleuse 88 manuell z. B. auf darunter angeordneten Rollen erfolgen oder durch einen geeigneten Antrieb unterstützt sein.

Während die Ladestation 86 vorzugsweise auf der üblichen für einen Bediener 59 geeigneten Höhe von z.B. 900 mm angeordnet ist, kann sich die Aufnahmeposition für Paletten 20 in der Bereitstellungsstation 16 auf einer anderen Höhe befinden, die z.B. für zugeordnete Bearbeitungsstationen geeignet ist, also beispielsweise etwa bei 1400 mm liegt.

Die erfindungsgemäße Handhabungsstation 10' ermöglicht eine derartige Ankopplung, ohne daß dazu zusätzliche Maßnahmen erforderlich sind.

Zum Transport von Paletten 20 in Vertikalrichtung zwischen verschiedenen Aufnahmeplätzen 18 der Lagerstationen 14 und 54 weist die Hebestation 12 eine Palettenaufnahme 28 auf, die mittels eines lediglich schematisch angedeuteten Linearantriebes 68, z.B. in Form eines Zahnriementriebes, in Vertikalrichtung gesteuert verfahrbar ist, um bestimmte Aufnahmeplätze 18 gezielt anfahren zu können. An der Palettenaufnahme 28 ist ferner eine Transporteinrichtung vorgesehen, mittels derer Paletten 20 zwischen einem Aufnahmeplatz 18 der Lagerstation 14, der Palettenaufnahme 28 und einem zugeordneten Aufnahmeplatz an der benachbarten Lagerstation 54 in Horizontalrichtung verfahrbar ist. Hierzu weist jede Palette 20 an ihrer einen Stirnseite jeweils zwei Mitnehmeraufnahmen 22 auf, die in den Eckbereichen angeordnet sind. Auf der Palettenaufnahme 28 ist ein Schleppantrieb 62 mit einem über zwei Rollen oder dergleichen geführten Endlosförderglied 64 vorgesehen, an dem Mitnehmer 66 vorgesehen sind, die in die Mitnehmeraufnahmen 22 einer jeweiligen Palette 20 eingreifen können. Mittels dieses Schleppantriebes 62 kann eine Palette somit zwischen der Lagerstation 14, der Palettenaufnahme 28 und der Lagerstation 54 jeweils auf dem Niveau in Horizontalrichtung bewegt werden, auf dem sich die Palettenaufnahme 28 gerade befindet.

Um einen Transport einer Palette 20 zwischen der Lagerstation 54 und der benachbarten Bereitstellungsstation 16 zu ermöglichen, ist auf dem Niveau der Bereitstellungsstation 16 ein zusätzlicher Antrieb 70 vorgesehen, der lediglich rein schematisch angedeutet ist und bei dem es sich gleichfalls um einen Schleppantrieb handeln kann oder beispielsweise um einen Linearantrieb oder einen anders gearteten Antrieb.

Bevorzugt ist auch dieser Antrieb 70 als Schleppantrieb wie der Schleppantrieb 62 ausgebildet und mit Mitnehmern versehen, die bereits in die Mitnehmeraufnahmen 22 einer Palette 20 eingreifen, bevor das Ende des Schleppantriebes 62 erreicht ist. So wird eine lückenlose Führung bis zur Bereitstellungsstation 16 gewährleistet.

Bevorzugt sind alle verwendeten Antriebe 62, 68, 70 als NCgesteuerte, frei programmierbare Antriebe ausgebildet.

An einer bearbeiteten Außenfläche der Lagerstation 54 kann sich auf der der Bereitstellungsstation 16 zugewandten Seite beispielsweise ein Portal 36 befinden. Hierauf kann gegebenenfalls jedoch auch verzichtet werden, oder es können andere Transportund/oder Handhabungsvorrichtungen im Bereich der Bereitstellungsstation 16 vorgesehen sein.

In dem in Fig. 2 dargestellten Fall ist entlang des Portals 36 ein Schlitten 78 mit Kübelachse und einer weiteren daran aufgenommenen Achse entlang des Portals verfahrbar, wie durch den Doppelpfeil 80 angedeutet ist. Ferner wird eine Verschwenkung um zwei Achsen ermöglicht, wie durch die Doppelpfeile 43 und 82 angedeutet ist. Mittels eines daran aufgenommenen Greifers können Teile aufgenommen oder abgelegt werden.

Zusätzlich kann im Bereich der Bereitstellungsstation 16 beispielsweise ein Schieber 72 vorgesehen sein, der eine Verschiebung von Teilen 21 zwischen einer Position unterhalb des Portals 48 bzw. unterhalb des Portals 56 und einer Position unterhalb des Schlittens 78 des Portals 36 ermöglicht.

Des weiteren kann beispielsweise ein Drehteller 74 an geeigneter Position angeordnet sein, mittels dessen Teile um bestimmte Winkel, z.B. um 90° oder um 180° verschwenkt werden können.

Des weiteren kann die Bereitstellungsstation 16 etwa mit einer Auffangwanne 84 ausgestattet sein, um beispielsweise einen Waschvorgang von Teilen zu erlauben. Weitere Zusatzeinrichtungen, die im Bereich der Bereitstellungsstation 16 vorgesehen sein können, sind beispielhaft mit der Ziffer 76 angedeutet. Hierbei kann es sich z.B. um eine Reinigungseinrichtung, eine Positoniereinrichtung, eine Schwenkeinrichtung, eine Abblaseinrichtung, ein Wascheinrichtung, eine Signiereinrichtung, eine Prüfeinrichtung oder dergleichen mehr handeln.

Die erfindungsgemäße Handhabungsvorrichtung 10 gemäß Fig. 1 bzw. 10' gemäß Fig. 2 kann auf die verschiedenartigste Weise an ein Fertigungssystem angekoppelt sein. Während in Fig. 2 zwei Portale 48, 56 angedeutet sind, die im Bereich der Bereitstellungsstation 16 enden und mittels darauf verfahrbarer Schlitten 50, 58 mit daran angeordneten Greifeinrichtungen einen Transport von Teilen zwischen der Bereitstellungsstation 16 und einer weiteren zugeordneten Station, wie etwa einer Bearbeitungsstation 60 ermöglichen, kann die Handhabungsvorrichtung auch auf andere Weise an ein Fertigungssystem angebunden sein, beispielsweise mittels einer Schwenkeinrichtung. Eine erfindungsgemäße Handhabungsvorrichtung kann z.B. über ein Portal mit einer oder mehreren Bearbeitungsstationen, wie z.B. Werkzeugmaschinen gekoppelt sein, um diese mit Rohteilen zu versorgen und Fertigeteile aus diesen aufzunehmen. Darüber hinaus kann die Handhabungsvorrichtung auch über geeignete Transporteinrichtungen, wie z.B. Portale mit weiteren Handhabungsvorrichtungen gekoppelt sein, oder mit weiteren Transportvorrichtungen, Speichereinrichtungen oder dergleichen.

## Patentansprüche

1. Handhabungsvorrichtung zur Handhabung und Bereitstellung von Teilen (21), mit einer Hebestation (12) zum Heben und Senken von Paletten (20), mit zwei Lagerstationen (14, 54), die auf gegenüberliegenden Seiten der Hebestation (12) angeordnet sind und in denen jeweils übereinander eine Mehrzahl von Aufnahmeplätzen (18) zur Aufnahme von Paletten (20) auf verschiedenen Niveaus vorgesehen sind, **gekennzeichnet durch** eine Bereitstellungsstation (16) zur Handhabung und Bereitstellung von Teilen (21), die auf der der Hebestation (12) gegenüberliegenden Seite von einer (54) der Lagerstationen (14, 54) angeordnet ist und die zur Kopplung mit mindestens einem Portal (48, 50) zur Übergabe von Teilen (21) ausgebildet ist, und **durch** Transportmittel (62, 70) zum Bewegen von Paletten (20) zwischen der Hebestation (12), den Lagerstationen (14, 54) und der Bereitstellungsstation (16), wobei das mindestens eine Portal (48, 58) die Bereitstellungsstation (16) mit einer weiteren Station, wie einer Bearbeitungsstation (60) oder einer Speichereinrichtung, verbindet und dazu ausgelegt ist, auf der Bereitstellungsstation (16) bereitgestellte Teile (21) mittels eines Greifers zu greifen und zu der weiteren Station zu verfahren.

2. Handhabungsvorrichtung nach Anspruch 1, mit einer Ladestation (86) zum Be- und Entladen von Teilen (21) oder Paletten (20).

3. Handhabungsvorrichtung nach einem der vorhergehenden Ansprüche, bei der die Bereitstellungsstation (16) ein Portal (36) aufweist, an dem mindestens ein Greifer (40) zur Handhabung von Teilen (21) verfahrbar aufgenommen ist.

4. Handhabungsvorrichtung nach einem der vorhergehenden Ansprüche, bei der die Bereitstellungsstation (16) mindestens eine Einrichtung (72, 74, 76, 78) zur Durchführung von Zusatzoperationen, wie eine Reinigungseinrichtung, eine Positioniereinrichtung, eine Schwenkeinrichtung zum Verschwenken von Teilen (21) um eine oder mehrere Achsen, eine Abblaseinrichtung, eine Wascheinrichtung, eine Signiereinrichtung oder eine Prüfeinrichtung zum Prüfen von Teilen (21), aufweist.

5. Handhabungsvorrichtung nach Anspruch 4, bei der die Bereitstellungsstation mit einer Auffangwanne (84) zum Auffangen von Flüssigkeiten versehen ist.

6. Handhabungsvorrichtung nach einem der vorhergehenden Ansprüche, bei der die Transportmittel einen Schleppantrieb (62) aufweisen, an dem mindestens ein Mitnehmer (66) vorgesehen ist, dem Mitnehmeraufnahmen (22) an den Paletten (20) zugeordnet sind.

7. Handhabungsvorrichtung nach einem der vorhergehenden Ansprüche, bei der zumindest ein NC-gesteuerter Antrieb (62, 68, 70) vorgesehen ist.

8. Handhabungsvorrichtung nach Anspruch 6 oder 7, bei der die Hebestation (12) eine in Vertikalrichtung geführte und verfahrbare Palettenaufnahme (28) aufweist, an der an zumindest einer Stirnfläche ein Endlosförderglied (64) des Schleppantriebes (62) derart angeordnet ist, daß eine Palette (20) mittels des mindestens einen Mitnehmers (66) zwischen der Hebestation (12) und mindestens einer benachbarten Station (14, 54) in Horizontalrichtung bewegbar ist.

9. Handhabungsvorrichtung nach einem der vorhergehenden Ansprüche, bei der die Hebestation (12) eine in Vertikalrichtung geführte und verfahrbare Palettenaufnahme (28) aufweist, die vorzugsweise mit einem Linearantrieb (68) zum Verfahren der Palettenaufnahme (28) in Vertikalrichtung gekoppelt ist.

10. Handhabungsvorrichtung nach einem der vorhergehenden Ansprüche, bei der zumindest im Bereich der Bereitstellungsstation (16) Anschlagelemente (46) vorgesehen sind, die mit den Transportmitteln zur Positionierung von Paletten (20) zusammenwirken.

11. Fertigungssystem mit mindestens einer Station (48, 56, 60) zur Durchführung von Bearbeitungs-, Transport- und/oder Handhabungsoperationen an Teilen, die über das Portal (48, 50) mit mindestens einer Handhabungsvorrichtung (10, 10') nach einem der vorhergehenden Ansprüche gekoppelt ist.

## Claims

1. Handling apparatus for handling and presenting parts (21), comprising a lifting station (12) for lifting and lowering of pallets (20), two storage stations (14, 54) which are arranged on opposite sides of the lifting station (12) and within each of which a plurality of stacked storage places (18) for receiving pallets (20) are provided at different levels, **characterized by** a presentation station (16) for handling and presenting parts (21), which presentation station (16) being arranged on a side of one (54) of the storage stations (14, 54) which is opposite to the lifting station (12), wherein the presentation station (12) is designed for linking with at least one gantry (48, 50) for transferring parts (21), and **characterized by** transport means (62, 70) for moving pallets (20) between the lifting station (12), the storage stations (14, 54) and the presentation station (16), wherein the at least one gantry (48, 58) links the presentation station (16) with at least one further station like a processing station (60) or a storage station, and is designed to grip parts (21) presented at the presentation station (16) by means of a gripping device and to transfer these parts to another station.

2. Handling apparatus of claim 1, comprising a loading station (86) for loading and unloading parts (21) or pallets (20).

3. Handling apparatus of one of the preceding claims, wherein the presentation station (16) comprises a gantry (36) whereon a gripping device (40) for handling parts (21) is received displaceably.

4. Handling apparatus of one of the preceding claims, wherein the presentation station (16) comprises at least one device (72, 74, 76, 78) for performing additional operations, such as a cleaning device, a positioning device, a pivoting device for pivoting parts (21) about one or more axes, a blowing device, a washing device, a marking device or an examining device for examining parts (21).

5. Handling apparatus of claim 4, wherein the presentation station comprises a receiving trough for collecting liquids.

6. Handling apparatus of one of the preceding claims, wherein the transport means comprise a towing drive (62) upon which at least one driver (66) is provided to which driver supports (22) on the pallets (20) are assigned.

7. Handling apparatus of one of the preceding claims, wherein at least one numerically controlled drive (62, 68, 70) is provided.

8. Handling apparatus of claim 6 or 7, wherein the lifting station (12) comprises a pallet support (28) being guided vertically displaceably, wherein at at least one front surface of which an endless conveyor element (64) of the towing device (62) is arranged so as to allow moving of a pallet (20) by means of the at least one driver (66) between the lifting station (12) and at least one adjacent station (14, 54) in horizontal direction.

9. Handling apparatus of one of the preceding claims, wherein the lifting station (12) comprises a pallet support (28) being guided vertically displaceably and, preferably, being linked to a linear drive (68) for vertically displacing the pallet support (28).

10. Handling apparatus of one of the preceding claims, further comprising stop elements (46) arranged at least in the region of the presentation station (16) and cooperating with the transport means for positioning pallets (20).

11. Manufacturing system comprising at least one station (48, 56, 60) for performing processing, transport and/or handling operations on parts, which is linked with at least one handling apparatus (10, 10') of one of the preceding claims.

## Revendications

1. Dispositif de manutention destiné à la manutention et à la mise à disposition de pièces (21), comportant un poste élévateur (12) destiné à monter et abaisser des palettes (20), deux postes de stockage (14, 54) disposés sur les deux côtés opposés du poste élévateur (12) et dans lesquels sont prévus une pluralité d'emplacements de réception (18) respectivement superposés, destinés à recevoir des palettes (20) sur différents niveaux, **caractérisé par** un poste de mise à disposition (16) destiné à la manutention et à la mise à disposition des pièces (21), lequel est agencé sur le côté, opposé au poste élévateur (12), de l'un (54) des postes de stockage (14, 54) et lequel est conçu pour être accouplé à au moins un portique (48, 50) destiné à transborder les pièces (21), et par des moyens de transport (62, 70) destinés à déplacer des palettes (20) entre le poste élévateur (12), les postes de stockage (14, 54) et le poste de mise à disposition (16), ledit au moins un portique (48, 58) reliant le poste de mise à disposition (16) à un autre poste, tel qu'un poste de traitement (60) ou une unité de stockage, et étant conçu pour saisir au moyen d'un préhenseur des pièces (21) préparées sur le poste de mise à disposition (16) et les transporter vers l'autre poste.

2. Dispositif de manutention selon la revendication 1, comportant un poste de chargement (86) pour charger et décharger les pièces (21) ou les palettes (20).

3. Dispositif de manutention selon l'une des revendications précédentes, dans lequel le poste de mise à disposition (16) comporte un portique (36), sur lequel est reçu de manière mobile au moins un préhenseur (40) destiné à manutentionner des pièces (21).

4. Dispositif de manutention selon l'une des revendications précédentes, dans lequel le poste de mise à disposition (16) comporte au moins un dispositif (72, 74, 76, 78) destiné à mettre en oeuvre des opérations supplémentaires, tel qu'un dispositif de nettoyage, un dispositif de positionnement, un dispositif de pivotement destiné à faire pivoter des pièces (21) autour d'un ou plusieurs axes, un dispositif de purge, un dispositif de lavage, un dispositif de marquage ou un dispositif de contrôle destiné à contrôler des pièces (21).

5. Dispositif de manutention selon la revendication 4, dans lequel le poste de mise à disposition est muni d'une cuve collectrice (84) destinée à recueillir des liquides.

6. Dispositif de manutention selon l'une des revendications précédentes, dans lequel les moyens de transport comportent un mécanisme d'entraînement (62), au niveau duquel est prévu au moins un entraîneur (66), auquel sont associés des logements pour entraîneur (22) prévus sur les palettes (20).

7. Dispositif de manutention selon l'une des revendications précédentes, dans lequel il est prévu au moins un entraînement à commande numérique (62, 68, 70).

8. Dispositif de manutention selon la revendication 6 ou 7, dans lequel le poste élévateur (12) comporte un récepteur de palettes (28), guidé et mobile dans le sens vertical, contre au moins une surface frontale duquel est disposé un convoyeur continu (64) du mécanisme d'entraînement (62), de telle sorte qu'une palette (20) est mobile dans le sens horizontal au moyen d'au moins un entraîneur (66) entre le poste élévateur (12) et au moins un poste voisin (14, 54).

9. Dispositif de manutention selon l'une des revendications précédentes, dans lequel le poste élévateur (12) comporte un récepteur de palettes (28), guidé et mobile dans le sens vertical, qui est couplé de préférence à un entraînement linéaire (68) pour déplacer le récepteur de palettes (28) dans le sens vertical.

10. Dispositif de manutention selon l'une des revendications précédentes, dans lequel au moins dans la zone du poste de mise à disposition (16) sont prévus des éléments de butée (46), qui coopèrent avec les moyens de transport pour le positionnement des palettes (20).

11. Système de fabrication comportant au moins un poste (48, 56, 60) destiné à la mise en oeuvre d'opérations de traitement, de transport et de manutention sur des pièces, lequel poste est couplé par l'intermédiaire du portique (48, 58) avec au moins un dispositif de manutention (10, 10') selon l'une des revendications précédentes.
